# FASCICULE DE BREVET EUROPEEN

(11) **EP 3 486 174 B1**
(45) Date de publication et mention de la délivrance du brevet: **01.01.2020**
(21) Numéro de dépôt: 18200084.4
(22) Date de dépôt: 12.10.2018
(51) Int. Cl.: B64D 27/26, F02C 7/20

(54) **ATTACHE MOTEUR ARRIERE POUR UN MOTEUR D'AERONEF**
HINTERE MOTORBEFESTIGUNG FÜR EINEN LUFTFAHRZEUGMOTOR
REAR ENGINE ATTACHMENT FOR AN AIRCRAFT ENGINE

(30) Priorité: 21.11.2017 FR 1761012
(43) Date de publication de la demande: 22.05.2019
(73) Titulaire: Airbus Operations S.A.S., 31060 Toulouse (FR)
(72) Inventeur: DEFORET, Thomas, 31300 TOULOUSE (FR); SOULIE, Adeline, 82600 VERDUN SUR GARONNE (FR); COMBES, Stéphane, 31660 BUZET SUR TARN (FR); GELIOT, Jean, 31400 TOULOUSE (FR); ORTEU, Benoit, 31000 TOULOUSE (FR)
(74) Mandataire: Gicquel, Olivier Yves Gérard

(56) Documents cités:
- EP-A1- 0 744 338
- EP-A1- 1 281 615
- FR-A1- 3 000 529
- GB-A- 2 224 707
- US-A1- 2013 302 157

## Description

La présente invention concerne une attache moteur arrière pour un moteur d'aéronef, ainsi qu'un aéronef comportant au moins une telle attache moteur arrière.

Un aéronef comporte classiquement une aile sous laquelle est fixé un mât auquel est fixé un moteur. Le moteur est fixé au mât via un système d'attaches constitué entre autres à l'avant par une attache moteur avant et à l'arrière par une attache moteur arrière. L'ensemble constitué du mât et de son système d'attaches se situe radialement au-dessus du moteur, dans un secteur horaire que l'on peut définir entre 10h et 14h et traverse la veine secondaire du moteur. Dans le but de réduire les perturbations aérodynamiques induites par cette traversée, le mât et son système d'attaches sont carénés par un capotage aérodynamique appelé bifurcation. Cette bifurcation est constituée de panneaux aux formes complexes qui favorisent l'écoulement de l'air dans la nacelle et sont fixés sur les parois latérales du mât.

L'attache moteur avant et l'attache moteur arrière sont classiquement fixées sous le mât. Il est connu, par exemple du document EP 1281 615, une attache moteur arrière prévue pour reprendre entre autres le moment Mx. Cette contrainte impose une structure particulière pour l'attache moteur arrière, ce qui la rend relativement imposante en prenant une grande place dans la bifurcation traversant la veine secondaire de la turbomachine. Il est donc nécessaire de trouver de nouvelles formes pour les attaches moteur afin de limiter l'encombrement dans cette bifurcation et ainsi d'améliorer la performance de la turbomachine par une réduction de l'obturation aérodynamique de sa veine secondaire.

Un objet de la présente invention est de proposer une attache moteur arrière qui présente un encombrement réduit par rapport aux systèmes d'attaches moteur arrière de l'état de la technique.

A cet effet, est proposée une attache moteur arrière pour un moteur d'un aéronef telle que revendiquée dans la revendication 1.

Une telle attache moteur arrière présente un encombrement réduit. En outre, selon des variantes, une telle attache moteur arrière forme un assemblage isostatique et une mobilité relative entre les deux biellettes permettent une adaptation en cas de la dilatation thermique du moteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef présentant au moins une attache moteur arrière selon l'invention,
la Fig. 2 est une vue en perspective d'une attache moteur arrière selon l'invention, et
la Fig. 3 est une vue éclatée et en perspective de l'attache moteur arrière de la Fig. 2.

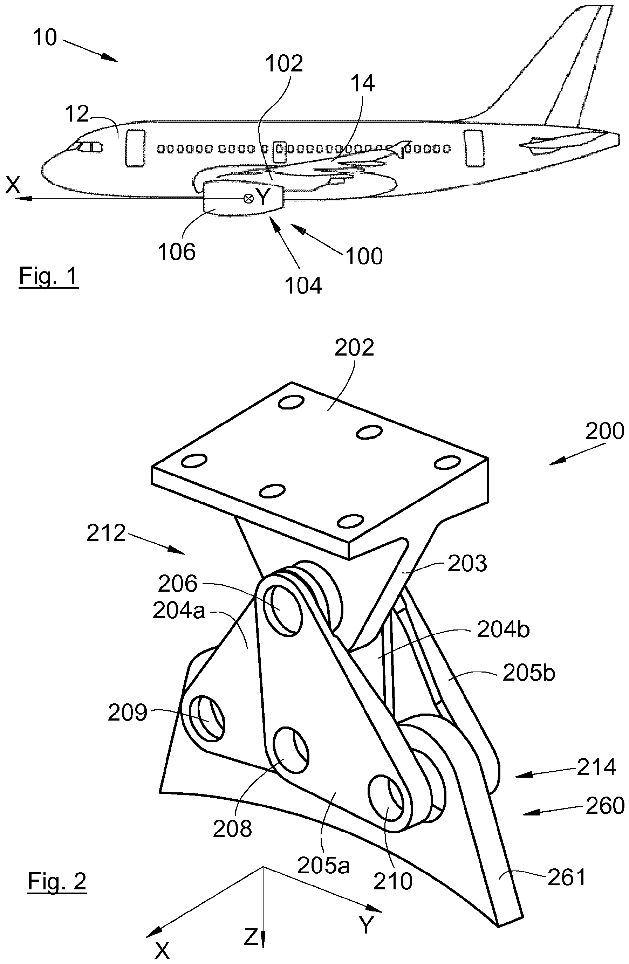

Dans la description qui suit, les termes relatifs à une position sont pris en référence à un aéronef en position d'avancement normal, c'est-à-dire comme il est représenté sur la Fig. 1.

La Fig. 1 montre un aéronef 10 qui comporte un fuselage 12 présentant une aile 14 de chaque côté.

Dans toute la description qui va suivre, par convention, la direction X correspond à la direction longitudinale de la turbomachine, cette direction étant parallèle à l'axe longitudinal X de cette turbomachine. D'autre part, la direction Y correspond à la direction orientée transversalement par rapport à la turbomachine, et la direction Z correspond à la direction verticale ou hauteur, ces trois directions X, Y, Z étant orthogonales entre elles.

Sous chaque aile 14 est fixé au moins un ensemble de motorisation 100 qui comporte un mât 102 fixé sous l'aile 14 et un moteur 104 fixé au mât 102. Le moteur 104 est par exemple un turbomoteur et il comprend entre autres un carter structural (« structural casing » en terminologie anglo-saxonne) qui est fixé au mât 102 et une nacelle 106 qui constitue le carénage aérodynamique du moteur 104 et qui est fixée à la fois au carter structural et au mât 102 qui prend la forme d'un caisson.

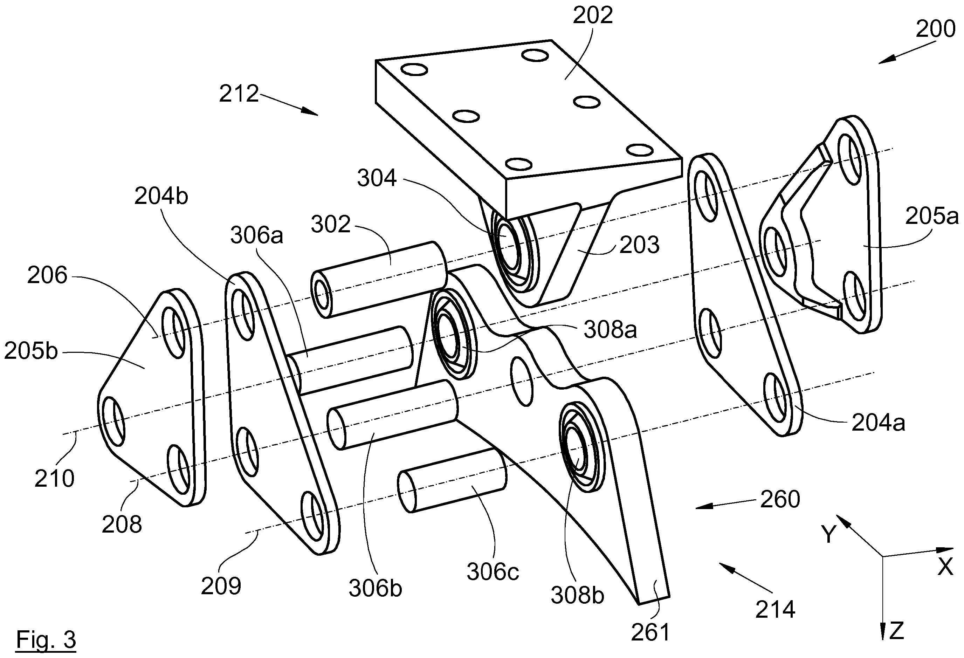

La fixation du carter structural au mât 102 est assurée entre autres, à l'avant, par une attache moteur avant et, à l'arrière, par une attache moteur arrière. La Fig. 2 montre une attache moteur arrière 200 qui se fixe entre le mât 102 et le carter structural 260 du moteur 104 et la Fig. 3 montre une vue éclatée de l'attache moteur arrière 200.

Le mât 102 présente une face inférieure qui est globalement horizontale et orientée vers le sol.

L'attache moteur arrière 200 comporte :
- une première ferrure 202 qui se fixe contre la face inférieure du mât 102 par exemple à l'aide de boulons et qui comporte une paroi 203 qui s'étend dans un plan perpendiculaire à l'axe longitudinal X et présente une face avant orientée vers l'avant de l'aéronef 10 et une face arrière orientée vers l'arrière de l'aéronef 10,
- une deuxième ferrure 261 qui est solidaire du carter structural 260 et qui prend la forme d'un mur qui s'étend dans un plan perpendiculaire à l'axe longitudinal X et présente une face avant orientée vers l'avant de l'aéronef 10 et une face arrière orientée vers l'arrière de l'aéronef 10,
- une biellette intérieure avant 204a,
- une biellette intérieure arrière 204b,
- une biellette extérieure avant 205a, et
- une biellette extérieure arrière 205b.

La paroi 203 est disposée globalement verticalement au-dessus de la deuxième ferrure 261.

La biellette intérieure avant 204a présente une face arrière qui se positionne en regard de la face avant de la paroi 203 et de la face avant de la deuxième ferrure 261.

La biellette intérieure arrière 204b présente une face avant qui se positionne en regard de la face arrière de la paroi 203 et de la face arrière de la deuxième ferrure 261.

La biellette extérieure avant 205a présente une face arrière qui se positionne en regard de la face avant de la biellette intérieure avant 204a.

La biellette extérieure arrière 205b présente une face avant qui se positionne en regard de la face arrière de la biellette intérieure arrière 204b.

La biellette intérieure avant 204a est fixée par un point de liaison principale 206 à la paroi 203 de la première ferrure 202 et par un premier et un deuxième points de liaison 208 et 209 à la deuxième ferrure 261 du carter structural 260.

La biellette extérieure avant 205a est fixée par le même point de liaison principale 206 à la paroi 203 de la première ferrure 202 et par le même premier et un autre deuxième points de liaison 208 et 210 à la deuxième ferrure 261 du carter structural 260.

La biellette intérieure arrière 204b est fixée par le même point de liaison principale 206 à la paroi 203 de la première ferrure 202 et par le même premier et le même deuxième points de liaison 208 et 209 à la deuxième ferrure 261 du carter structural 260 que la biellette intérieure avant 204a mais de l'autre côté de la paroi 203.

La biellette extérieure arrière 205b est fixée par le même point de liaison principale 206 à la paroi 203 de la première ferrure 202 et par le même premier et le même deuxième points de liaison 208 et 210 à la deuxième ferrure 261 du carter structural 260 que la biellette extérieure avant 205a mais de l'autre côté de la paroi 203.

Chaque biellette 204a-b, 205a-b présente ainsi trois points de liaison.

Le point de liaison principale 206 et le premier point de liaison 208 sont globalement alignés verticalement, tandis que les deux deuxièmes points de liaison 209 et 210 sont disposés de part et d'autre du premier point de liaison 208 par rapport à un plan médian vertical XZ.

Chaque biellette 204a-b, 205a-b présente ainsi uniquement deux points de liaison avec le carter structural 260.

Un tel assemblage est donc relativement peu encombrant et les biellettes 204a-b, 205a-b ont des formes relativement simples, ici des plaques triangulaires.

Chaque point de liaison 206, 208, 209, 210 constitue un assemblage entre au moins deux pièces et ledit assemblage comporte au moins un degré de liberté en rotation autour d'un axe parallèle à l'axe longitudinal X. C'est-à-dire que les pièces liées au niveau d'un point de liaison, présentent entre elles au moins une rotation possible autour de l'axe parallèle à l'axe longitudinal X.

L'assemblage ainsi constitué prend la forme d'une double chape 212, 214 où les flancs sont constitués, du côté avant, par les biellettes avant 204a et 205a, et, du côté arrière, par les biellettes arrière 204b et 205b, où pour une chape 212, la paroi 203 se positionne entre ces flancs, et où pour une autre chape 214, la deuxième ferrure 261 se positionne entre ces flancs.

Le point de liaison principale 206 à la première ferrure 202 est ainsi constitué par un alésage traversant la paroi 203, par un alésage traversant chaque biellette 204a-b, 205a-b et par un axe 302, en particulier un axe de cisaillement double, qui s'emmanche dans l'alésage de chaque biellette 204a-b, 205a-b et dans l'alésage de la paroi 203. Un axe de cisaillement double est constitué de deux axes emmanchés l'un dans l'autre. La fixation de l'axe 302 dans l'alésage de la paroi 203 s'effectue en particulier à travers une liaison rotule 304.

Chaque point de liaison 208, 209, 210 à la deuxième ferrure 261 est constitué par un alésage traversant la deuxième ferrure 261, pour chaque biellette 204a-b, 205a-b associée au point de liaison 208, 209, 210, par un alésage traversant ladite biellette 204a-b, 205a-b et par un axe 306a-c, en particulier un axe de cisaillement simple, qui s'emmanche dans l'alésage de chaque biellette 204a-b, 205a-b et dans l'alésage de la deuxième ferrure 261.

Pour les deuxièmes points de liaison 209 et 210, la fixation de l'axe dans l'alésage de la biellette 204a-b s'effectue en particulier à travers une liaison rotule 308a-b.

Le premier et les deuxièmes points de liaison 208, 209 et 210 assurent la fixation des biellettes 204a-b, 205a-b au carter structural 260.

Les axes des chapes 212 et 214, et les axes des alésages constituent les axes de rotation des points de liaison et sont parallèles à l'axe longitudinal X.

Chaque deuxième point de liaison 209, 210 est monté ajusté, c'est-à-dire qu'il n'y a pas de mouvement linéaire possible, d'une part, entre les biellette intérieures 204a-b et l'axe, 306c associé au deuxième point de liaison 209, d'autre part, entre les biellettes extérieures 205a-b et l'axe 306a associé au deuxième point de liaison 210, ainsi qu'entre la deuxième ferrure 261 et l'axe 306a, 306c associé audit deuxième point de liaison 209, 210. Les seuls mouvements possibles sont des mouvements de rotation, en particulier à travers la liaison rotule 308a-b.

De la même manière, le point de liaison principale 206 est monté ajusté, c'est-à-dire qu'il n'y a pas de mouvement linéaire possible, d'une part, entre les biellettes 204a-b, 205a-b et l'axe 302, et, d'autre part, entre la paroi 203 et l'axe 302. Les seuls mouvements possibles sont des mouvements de rotation, en particulier à travers la liaison rotule 304.

Le premier point de liaison 208 est lâche, c'est-à-dire monté avec jeu, au niveau de la deuxième ferrure 261, c'est-à-dire que, non seulement des mouvements de rotation sont possibles, mais également des mouvements linéaires sont possibles entre la deuxième ferrure 261 et l'axe 306b.

Le premier point de liaison 208 est monté ajusté au niveau des biellettes intérieures 204a-b, c'est-à-dire qu'il n'y a pas de mouvement linéaire possible entre les biellettes intérieures 204a-b et l'axe 306b et les seuls mouvements possibles sont des mouvements de rotation.

Le premier point de liaison 208 est lâche, c'est-à-dire monté avec jeu, au niveau des biellettes extérieures 205a-b, c'est-à-dire que, non seulement des mouvements de rotation sont possibles, mais également des mouvements linéaires sont possibles entre les biellettes extérieures 205a-b et l'axe 306b.

Grâce à cette liberté de mouvement linéaire, l'attache moteur arrière 200 forme un assemblage isostatique et permet un déplacement des biellettes extérieures 205a-b et un déplacement de l'axe 306b dans l'alésage de la deuxième ferrure 261 en cas de dilatation thermique du moteur. Ainsi, les biellettes extérieures 205a-b peuvent se resserrer ou s'écarter comme des ciseaux par rotation autour du point de liaison principale 206. Cette liberté de mouvement est réalisée par le fait que les diamètres des alésages des biellettes extérieures 205a-b et de la deuxième ferrure 261 sont supérieurs au diamètre de l'axe 306b au niveau du premier point de liaison 208.

A travers le point de liaison principale 206 et chaque deuxième point de liaison 209, 210, la première ferrure 202 et les biellettes 204a-b, 205a-b définissent en combinaison un chemin primaire d'efforts entre le moteur et le mât pour supporter les charges du moteur. Le premier point de liaison 208 constitue un point de fixation de sécurité en attente activé en cas de défaillance du chemin primaire d'efforts et qui crée un chemin auxiliaire d'efforts entre le moteur et le mât réacteur.

Du fait de la différence de diamètre entre les alésages des biellettes extérieures 205a-b réalisant le premier point de liaison 208 et l'axe 306b, en fonctionnement normal, il n'y a aucun contact entre l'axe 306b et les biellettes extérieures 205a-b, et en cas de problème, le carter structural 260 va se déplacer et l'axe 306b vient alors en contact avec au moins l'une des biellettes extérieures 205a-b.

En l'état et en opposition à l'art antérieur, l'attache moteur arrière selon l'invention n'est pas faite pour transmettre le moment de torsion (Mx) de la turbomachine à la structure avion. Elle est destinée à être associée à une attache moteur avant pour constituer un système d'attaches moteur isostatique.

## Revendications

1. Attache moteur arrière (200) pour un moteur d'un aéronef (10) qui comporte un mât (102) présentant une face inférieure, ladite attache moteur arrière (200) comportant :
- une première ferrure (202) destinée à être fixée contre ladite face inférieure et comportant une paroi (203) qui s'étend dans un plan perpendiculaire à un axe longitudinal X et présentant une face avant destinée à être orientée vers l'avant de l'aéronef (10) et une face arrière destinée à être orientée vers l'arrière de l'aéronef (10),
- une deuxième ferrure (261) destinée à être solidaire d'un carter structural (260) du moteur, ladite deuxième ferrure (261) s'étendant dans un plan perpendiculaire à l'axe longitudinal X et présentant une face avant destinée à être orientée vers l'avant de l'aéronef (10) et une face arrière destinée à être orientée vers l'arrière de l'aéronef (10),
- une biellette intérieure avant (204a),
- une biellette intérieure arrière (204b),
- une biellette extérieure avant (205a), et
- une biellette extérieure arrière (205b),
la biellette intérieure avant (204a) présentant une face arrière qui se positionne en regard de la face avant de la paroi (203) et en regard de la face avant de la deuxième ferrure (261),
la biellette intérieure arrière (204b) présentant une face avant qui se positionne en regard de la face arrière de la paroi (203) et en regard de la face arrière de la deuxième ferrure (261),
**caractérisé en ce que** la biellette extérieure avant (205a) présente une face arrière qui se positionne en regard de la face avant de la biellette intérieure avant (204a),
et la biellette extérieure arrière (205b) présente une face avant qui se positionne en regard de la face arrière de la biellette intérieure arrière (204b),
et la biellette intérieure avant (204a) est fixée par un point de liaison principale (206) à la paroi (203) et par un premier et un deuxième points de liaison (208, 209) à la deuxième ferrure (261),
et la biellette extérieure avant (205a) est fixée par le même point de liaison principale (206) à la paroi (203) et par le même premier et un autre deuxième points de liaison (208, 210) à la deuxième ferrure (261),
et la biellette intérieure arrière (204b) est fixée par le même point de liaison principale (206) à la paroi (203) et par le même premier et le même deuxième points de liaison (208, 209) à la deuxième ferrure (261) que la biellette intérieure avant (204a),
et la biellette extérieure arrière (205b) est fixée par le même point de liaison principale (206) à la paroi (203) et par le même premier et le même deuxième points de liaison (208, 210) à la deuxième ferrure (261) que la biellette extérieure avant (205a).

2. Attache moteur arrière (200) selon la revendication 1, **caractérisée en ce que** le point de liaison principale (206) est constitué par un alésage traversant la paroi (203), par un alésage traversant chaque biellette (204a-b, 205a-b) et par un axe (302) qui s'emmanche dans l'alésage de chaque biellette (204a-b, 205a-b) et dans l'alésage de la paroi (203), **en ce que** chaque point de liaison (208, 209, 210) à la deuxième ferrure (261) est constitué par un alésage traversant la deuxième ferrure (261), pour chaque biellette (204a-b, 205a-b) associée au point de liaison (208, 209, 210), par un alésage traversant ladite biellette (204a-b, 205a-b) et par un axe (306a-c) qui s'emmanche dans l'alésage de chaque biellette (204a-b, 205a-b) et dans l'alésage de la deuxième ferrure (261).

3. Attache moteur arrière (200) selon la revendication 2, **caractérisée en ce que** le point de liaison principale (206) est monté ajusté, **en ce que** chaque deuxième point de liaison (209, 210) est monté ajusté, **en ce que** le premier point de liaison (208) est monté avec jeu au niveau de la deuxième ferrure (261), **en ce que** le premier point de liaison (208) est monté ajusté au niveau des biellettes intérieures (204a-b), et **en ce que** le premier point de liaison (208) est monté avec jeu au niveau des biellettes extérieures (205a-b).

4. Aéronef (10) comportant un mât (102) présentant une face inférieure, un moteur présentant un carter structural (260) et une attache moteur arrière (200) selon l'une des revendications précédentes, où la première ferrure (202) est fixée contre ladite face inférieure, et où la deuxième ferrure (261) est solidaire du carter structural (260).

## Patentansprüche

1. Hintere Triebwerksaufhängung (200) für ein Triebwerk eines Luftfahrzeugs (10), das einen Pylon (102) umfasst, der eine Unterseite aufweist, wobei die hintere Triebwerksaufhängung (200) umfasst:
- ein erstes Beschlagteil (202), das dazu bestimmt ist, an der Unterseite befestigt zu werden, und eine Wand (203) umfasst, die sich in einer senkrecht zu einer Längsachse X verlaufenden Ebene erstreckt und eine Vorderseite aufweist, die dazu bestimmt ist, zum Bug des Luftfahrzeugs (10) gerichtet zu sein, und eine Rückseite, die dazu bestimmt ist, zum Heck des Luftfahrzeugs (10) gerichtet zu sein,
- ein zweites Beschlagteil (261), das dazu bestimmt ist, fest mit einem strukturellen Gehäuse (260) des Triebwerks verbunden zu werden, wobei sich das zweite Beschlagteil (261) in einer senkrecht zu einer Längsachse X verlaufenden Ebene erstreckt und eine Vorderseite aufweist, die dazu bestimmt ist, zum Bug des Luftfahrzeugs (10) gerichtet zu sein, und eine Rückseite, die dazu bestimmt ist, zum Heck des Luftfahrzeugs (10) gerichtet zu sein,
- einen vorderen inneren Lenker (204a),
- einen hinteren inneren Lenker (204b),
- einen vorderen äußeren Lenker (205a), und
- einen hinteren äußeren Lenker (205b),
wobei der vordere innere Lenker (204a) eine Rückseite aufweist, die der Vorderseite der Wand (203) zugewandt und der Vorderseite des zweiten Beschlagteils (261) zugewandt angeordnet ist,
wobei der hintere innere Lenker (204b) eine Vorderseite aufweist, die der Rückseite der Wand (203) zugewandt und der Rückseite des zweiten Beschlagteils (261) zugewandt angeordnet ist,
**dadurch gekennzeichnet, dass** der vordere äußere Lenker (205a) eine Rückseite aufweist, die der Vorderseite des vorderen inneren Lenkers (204a) zugewandt angeordnet ist,
und der hintere äußere Lenker (205b) eine Vorderseite aufweist, die der Rückseite des hinteren inneren Lenkers (204b) zugewandt angeordnet ist,
und der vordere innere Lenker (204a) über eine Hauptverbindungsstelle (206) an der Wand (203) und über eine erste und eine zweite Verbindungsstelle (208, 209) an dem zweiten Beschlagteil (261) befestigt ist,
und der vordere äußere Lenker (205a) über dieselbe Hauptverbindungsstelle (206) an der Wand (203) und über dieselbe erste und eine andere zweite Verbindungsstelle (208, 210) an dem zweiten Beschlagteil (261) befestigt ist,
und der hintere innere Lenker (204b) über dieselbe Hauptverbindungsstelle (206) an der Wand (203) und über dieselbe erste und dieselbe zweite Verbindungsstelle (208, 209) wie der vordere innere Lenker (204a) an dem zweiten Beschlagteil (261) befestigt ist,
und der hintere äußere Lenker (205b) über dieselbe Hauptverbindungsstelle (206) an der Wand (203) und über dieselbe erste und dieselbe zweite Verbindungsstelle (208, 210) wie der vordere äußere Lenker (205a) an dem zweiten Beschlagteil (261) befestigt ist.

2. Hintere Triebwerksaufhängung (200) nach Anspruch 1, **dadurch gekennzeichnet, dass** die Hauptverbindungsstelle (206) aus einer Bohrung, welche die Wand (203) durchquert, aus einer Bohrung, die jeden Lenker (204a-b, 205a-b) durchquert, und aus einem Bolzen (302), der in die Bohrung jedes Lenkers (204a-b, 205a-b) und in die Bohrung der Wand (203) eingesetzt ist, besteht, dass jede Verbindungsstelle (208, 209, 210) an dem zweiten Beschlagteil (261) aus einer Bohrung, die das zweite Beschlagteil (261) durchquert, für jeden Lenker (204a-b, 205a-b), welcher der Verbindungsstelle (208, 209, 210) zugeordnet ist, aus einer Bohrung, die den Lenker (204a-b, 205a-b) durchquert, und aus einem Bolzen (306a-c), der in die Bohrung jedes Lenkers (204a-b,205a-b) und in die Bohrung des zweiten Beschlags (261) eingesetzt ist, besteht.

3. Hintere Triebwerksaufhängung (200) nach Anspruch 2, **dadurch gekennzeichnet, dass** die Hauptverbindungsstelle (206) passgenau montiert ist, dass jede zweite Verbindungstelle (209, 210) passgenau montiert ist, dass die erste Verbindungsstelle (208) am zweiten Beschlagteil (261) mit Spiel montiert ist, dass die erste Verbindungsstelle (208) an den inneren Lenkern (204a-b) passgenau montiert ist und dass die erste Verbindungstelle (208) an den äußeren Lenkern (205a-b) mit Spiel montiert ist.

4. Luftfahrzeug (10), das einen Pylon (102), der eine Unterseite aufweist, ein Triebwerk, das ein strukturelles Gehäuse (260) aufweist, und eine hintere Triebwerksaufhängung (200) nach einem der vorhergehenden Ansprüche umfasst, wobei das erste Beschlagteil (202) an der Unterseite befestigt ist und wobei das zweite Beschlagteil (261) fest mit dem strukturellen Gehäuse (260) verbunden ist.

## Claims

1. Rear engine attachment (200) for an engine of an aircraft (10) which comprises a pylon (102) having a bottom face, said rear engine attachment (200) comprising:
- a first fitting (202) intended to be fixed against said bottom face and comprising a wall (203) which extends in a plane at right angles to a longitudinal axis X and having a front face intended to be oriented towards the front of the aircraft (10) and a rear face intended to be oriented towards the rear of the aircraft (10),
- a second fitting (261) intended to be secured to a structural casing (260) of the engine, said second fitting (261) extending in a plane at right angles to the longitudinal axis X and having a front face intended to be oriented towards the front of the aircraft (10) and a rear face intended to be oriented towards the rear of the aircraft (10),
- a front inner link (204a),
- a rear inner link (204b),
- a front outer link (205a), and
- a rear outer link (205b),
the front inner link (204a) having a rear face which is positioned facing the front face of the wall (203) and facing the front face of the second fitting (261),
the rear inner link (204b) having a front face which is positioned facing the rear face of the wall (203) and facing the rear face of the second fitting (261),
**characterized in that** the front outer link (205a) has a rear face which is positioned facing the front face of the front inner link (204a),
and the rear outer link (205b) has a front face which is positioned facing the rear face of the rear inner link (204b),
and the front inner link (204a) is fixed by a main link point (206) to the wall (203) and by a first and a second link points (208, 209) to the second fitting (261),
and the front outer link (205a) is fixed by the same main link point (206) to the wall (203) and by the same first and another second link points (208, 210) to the second fitting (261),
and the rear inner link (204b) is fixed by the same main link point (206) to the wall (203) and by the same first and the same second link points (208, 209) to the second fitting (261) as the front inner link (204a),
and the rear outer link (205b) is fixed by the same main link point (206) to the wall (203) and by the same first and the same second link points (208, 210) to the second fitting (261) as the front outer link (205a).

2. Rear engine attachment (200) according to Claim 1, **characterized in that** the main link point (206) consists of a bore passing through the wall (203), a bore passing through each link (204a-b, 205a-b) and an axis (302) which is fitted into the bore of each link (204a-b, 205a-b) and into the bore of the wall (203), **in that** each link point (208, 209, 210) to the second fitting (261) consists of a bore passing through the second fitting (261), for each link (204a-b, 205a-b) associated with the link point (208, 209, 210), a bore passing through said link (204a-b, 205a-b) and an axis (306a-c) which is fitted into the bore of each link (204a-b, 205a-b) and into the bore of the second fitting (261).

3. Rear engine attachment (200) according to Claim 2, **characterized in that** the main link point (206) is mounted without play, **in that** each second link point (209, 210) is mounted without play, **in that** the first link point (208) is mounted with play at the second fitting (261), **in that** the first link point (208) is mounted without play at the inner links (204a-b), and **in that** the first link point (208) is mounted with play at the outer links (205a-b).

4. Aircraft (10) comprising a pylon (102) having a bottom face, an engine having a structural casing (260) and a rear engine attachment (200) according to one of the preceding claims, where the first fitting (202) is fixed against said bottom face, and where the second fitting (261) is secured to the structural casing (260).
